# EUROPEAN PATENT SPECIFICATION

(11) **EP 3 717 431 B1**
(45) Date of publication and mention of the grant of the patent: **30.08.2023**
(21) Application number: 18819438.5
(22) Date of filing: 29.11.2018
(51) Int. Cl.: C03C 17/00, C03C 17/32, C03C 17/34, C03C 17/42, C03C 21/00, C03B 21/02, A61J 1/14, A61J 1/06

(54) **GLASS ARTICLES WITH LOW-FRICTION COATINGS AND METHODS FOR COATING GLASS ARTICLES**
GLASARTIKEL MIT REIBUNGSARMEN BESCHICHTUNGEN UND VERFAHREN ZUM BESCHICHTEN VON GLASARTIKELN
ARTICLES EN VERRE À REVÊTEMENTS À FAIBLE FROTTEMENT ET PROCÉDÉS DE REVÊTEMENT D'ARTICLES EN VERRE

(30) Priority: 30.11.2017 US 201762592664 P
(43) Date of publication of application: 07.10.2020
(73) Proprietor: Corning Incorporated, Corning, New York 14831 (US)
(72) Inventor: FADEEV, Andrei Gennadyevich, Elmira New York 14903 (US); WANG, Ji, Painted Post New York 14870 (US)
(74) Representative: Elkington and Fife LLP
(86) International application number: PCT/US2018/063142
(87) International publication number: WO 2019/108845

(56) References cited:
- WO-A1-2005/051454
- WO-A1-2014/085249
- GB-A- 1 180 132
- PUETZ J ET AL: "Wet chemical deposition of transparent conducting coatings in glass tubes", THIN SOLID F, ELSEVIER, AMSTERDAM, NL, vol. 442, no. 1-2, 1 October 2003 (2003-10-01), pages 53-59, XP004458298, ISSN: 0040-6090, DOI: 10.1016/S0040-6090(03)00941-6

## Description

### FIELD

The present disclosure generally relates to coatings and, more particularly, to low-friction coatings applied to glass articles such as pharmaceutical packages.

### BACKGROUND

Historically, glass has been used as a preferred material for many applications, including food and beverage packaging, pharmaceutical packaging, kitchen and laboratory glassware, and windows or other architectural features, because of its hermeticity, optical clarity and excellent chemical durability relative to other materials.

However, use of glass for many applications is limited by the mechanical performance of the glass. In particular, glass breakage is a concern, particularly in the packaging of food, beverages, and pharmaceuticals. Breakage can be costly in the food, beverage, and pharmaceutical packaging industries because, for example, breakage within a filling line may require that neighboring unbroken containers be discarded as the containers may contain fragments from the broken container. Breakage may also require that the filling line be slowed or stopped, lowering production yields. Further, non-catastrophic breakage (i.e., when the glass cracks but does not break) may cause the contents of the glass package or container to lose their sterility which, in turn, may result in costly product recalls.

One root cause of glass breakage is the introduction of flaws in the surface of the glass as the glass is processed and/or during subsequent filling. These flaws may be introduced in the surface of the glass from a variety of sources including contact between adjacent pieces of glassware and contact between the glass and equipment, such as handling and/or filling equipment. Regardless of the source, the presence of these flaws may ultimately lead to glass breakage.

Ion exchange processing is a process used to strengthen glass articles. Ion exchange imparts a compression (i.e., compressive stress) onto the surface of a glass article by chemically replacing smaller ions within the glass article with larger ions from a molten salt bath. The compression on the surface of the glass article raises the mechanical stress threshold to propagate cracks; thereby, improving the overall strength of the glass article. Additionally, addition of coatings to surfaces of the glass articles may also increase damage resistance and impart improved strength and durability to the glass articles.
Coated glass articles are, for example, described in WO 2014/085249 A1, GB 1,180,132 and WO 2005/051454 A1

### SUMMARY

The invention relates to a method for forming a glass container having a low-friction coating. The method includes contacting a glass tube with a coupling agent solution to form a coated glass tube having a coupling agent layer, wherein the coupling agent includes an inorganic material selected from a metal, meatal oxide and/or ceramic film, contacting the coated glass tube with at least one sacrificial material to form a sacrificial layer at least partially covering the coupling agent layer, subsequent to contacting the coated glass tube with at least one sacrificial material, forming at least one coated glass container from the coated glass tube, the at least one coated glass container including the coupling agent layer, ion exchange strengthening the at least one coated glass container in an ion exchange salt bath, and applying a polymer chemical composition solution to the at least one coated glass container to form a low-friction coating. Forming the at least one coated glass article further comprises removing the sacrificial layer from the coated glass tube.

Additional features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate one or more embodiment(s), and together with the description serve to explain principles and operation of the various embodiments.

### BRIEF DESCRIPTION OF THE DRAWINGS

The disclosure will be understood more clearly from the following description and from the accompanying figures, given purely by way of non-limiting example, in which:
FIG. 1 schematically depicts a cross section of a glass container with a low-friction coating;
FIG. 2 schematically depicts a cross section of a glass container with a low-friction coating having a polymer layer and a coupling agent layer;
FIG. 3 schematically depicts a cross section of a glass container with a low-friction coating having a polymer layer, a coupling agent layer, and an interface layer,
FIG. 4 shows an example of a diamine monomer chemical composition;
FIG. 5 shows an example of a diamine monomer chemical composition;
FIG. 6 depicts the chemical structures of monomers that may be used as polyimide coatings applied to glass containers;
FIG. 7 is a flow diagram of a method for forming a glass container with a low-friction coating;
FIG. 8 schematically depicts the steps of the flow diagram of FIG. 7;
FIG. 9 shows an SEM image on a 1.00 µm scale of a SnO₂ layer on a glass article; and
FIG. 10 shows an SEM image on a 500 nm scale of a SnO₂ layer on a glass article.

### DETAILED DESCRIPTION

Reference will now be made in detail to the present embodiment(s), an example(s) of which is/are illustrated in the accompanying drawings. Whenever possible, the same reference numerals will be used throughout the drawings to refer to the same or like parts.

The singular forms "a," "an" and "the" include plural referents unless the context clearly dictates otherwise. The endpoints of all ranges reciting the same characteristic are independently combinable and inclusive of the recited endpoint.

As used herein, "have," "having," "include," "including," "comprise," "comprising" or the like are used in their open ended sense, and generally mean "including, but not limited to."

All scientific and technical terms used herein have meanings commonly used in the art unless otherwise specified. The definitions provided herein are to facilitate understanding of certain terms used frequently herein and are not meant to limit the scope of the present disclosure.

The present disclosure is described below, at first generally, then in detail on the basis of several exemplary embodiments. The features shown in combination with one another in the individual exemplary embodiments do not all have to be realized. In particular, individual features may also be omitted or combined in some other way with other features shown of the same exemplary embodiment or else of other exemplary embodiments.

The present invention relate to a method for forming glass articles having a low-friction coating. Such coated glass articles may be glass containers suitable for use in various packaging applications including, without limitation, pharmaceutical packages. These pharmaceutical packages may or may not contain a pharmaceutical composition.

Generally, a low-friction coating may be applied to a surface of a glass article, such as a container that may be used as a pharmaceutical package. The low-friction coating may provide advantageous properties to the coated glass article such as a reduced coefficient of friction and increased damage resistance. The reduced coefficient of friction may impart improved strength and durability to the glass article by mitigating frictive damage to the glass. Further, the low-friction coating may maintain the aforementioned improved strength and durability characteristics following exposure to elevated temperatures and other conditions, such as those experienced during packaging and pre-packaging steps utilized in packaging pharmaceuticals, such as, for example, depyrogentation, autoclaving and the like. Furthermore, the low coefficient of friction coating as described herein may allow for more consistent and predictable alignment of the coated glass articles during filling and packaging steps as the coating provides, which in turn may result in fewer equipment interruptions, stoppages, jams, while enabling higher processing speeds. Accordingly, the low-friction coatings and glass articles with the low-friction coating are thermally stable.

The low-friction coating may generally include a coupling agent, such as a metal oxide, and a polymer chemical composition, such as a polyimide. The coupling agent may be disposed in a coupling agent layer positioned on the surface of the glass article and the polymer chemical composition may be disposed in a polymer layer positioned on the coupling agent layer.

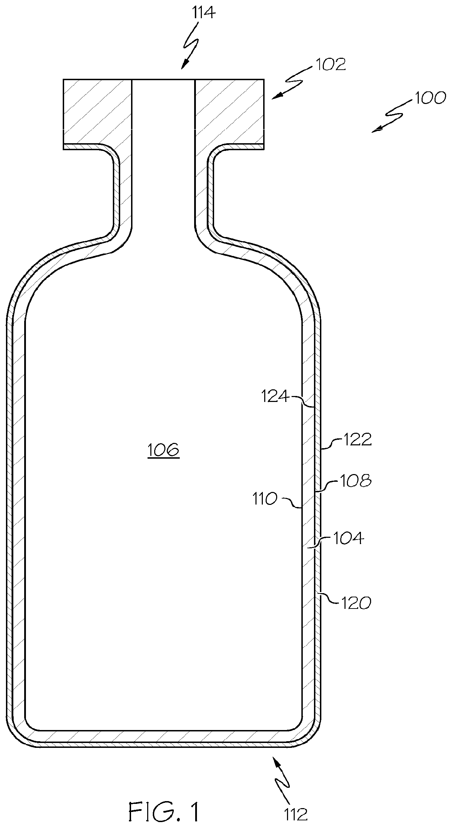

FIG. 1 schematically depicts a cross section of a coated glass article, specifically a coated glass container 100. The coated glass container 100 includes a glass body 102 and a low-friction coating 120. The glass body 102 has a glass container wall 104 extending between an exterior surface 108 (i.e., a first surface) and an interior surface 110 (i.e., a second surface). The interior surface 110 of the glass container wall 104 defines an interior volume 106 of the coated glass container 100. A low-friction coating 120 is positioned on at least a portion of the exterior surface 108 of the glass body 102. The low-friction coating 120 may be positioned on substantially the entire exterior surface 108 of the glass body 102. The low-friction coating 120 has an outer surface 122 and a glass body contacting surface 124 at the interface of the glass body 102 and the low-friction coating 120. The low-friction coating 120 may be bonded to the glass body 102 at the exterior surface 108.

The coated glass container 100 may be a pharmaceutical package. For example, the glass body 102 may be in the shape of a vial, ampoule, ampul, bottle, cartridge, flask, phial, beaker, bucket, carafe, vat, syringe body, or the like. The coated glass container 100 may be used for containing any composition, for example a pharmaceutical composition. A pharmaceutical composition may include any chemical substance intended for use in the medical diagnosis, cure, treatment, or prevention of disease. Examples of pharmaceutical compositions include, but are not limited to, medicines, drugs, medications, medicaments, remedies, and the like. The pharmaceutical composition may be in the form of a liquid, solid, gel, suspension, powder, or the like.

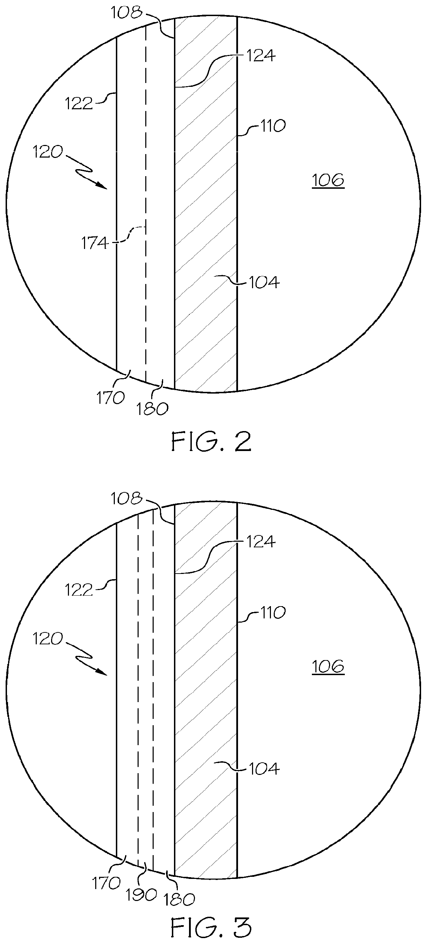

Now referring to FIGS. 1 and 2, the low-friction coating 120 may include a bilayered structure. FIG. 2 shows a cross section of a coated glass container 100 having low-friction coating 120 which includes a polymer layer 170 and a coupling agent layer 180. A polymer chemical composition may be contained in polymer layer 170 and a coupling agent may be contained in a coupling agent layer 180. The coupling agent layer 180 may be in direct contact with the exterior surface 108 of the glass container wall 104. The polymer layer 170 may be in direct contact with the coupling agent layer 180 and may form the outer surface 122 of the low-friction coating 120. The coupling agent layer 180 may be bonded to the glass wall 104 and the polymer layer 170 may be bonded to and/or mechanically interlocked with the coupling agent layer 180 at an interface. The polymer layer may be positioned over the coupling agent layer, meaning that the polymer layer 170 is in an outer layer relative to the coupling agent layer 180, and the glass wall 104. As used herein, a first layer positioned "over" a second layer refers either to the first layer being in direct contact with the second layer or being separated from the second layer, such as with a third layer disposed between the first and second layers.

Referring now to FIG. 3, the low-friction coating 120 may further include an interface layer 190 positioned between the coupling agent layer 180 and the polymer layer 170. The interface layer 190 may include one or more chemical compositions of the polymer layer 170 and one or more of the chemical compositions of the coupling agent layer 180. The interface of the coupling agent layer and polymer layer forms an interface layer 190 where bonding and/or mechanical interlocking occurs between the polymer chemical composition and the coupling agent. However, it should be understood that there may be no appreciable layer at the interface of the coupling agent layer 180 and polymer layer 170 where the polymer and coupling agent are chemically bound to one another and/or mechanically interlocked with one another as described above with reference to FIG. 2.

The low-friction coating 120 may have a thickness of less than about 100 µm or even less than or equal to about 1 µm. For example, the thickness of the low-friction coating 120 may be less than or equal to about 100 nm, or less than about 90 nm thick, or less than about 80 nm thick, or less than about 70 nm thick, or less than about 60 nm thick, or less than about 50 nm, or even less than about 25 nm thick. The low-friction coating 120 may not be of uniform thickness over the entirety of the glass body 102. For example, the coated glass container 100 may have a thicker low-friction coating 120 in some areas, due to the process of contacting the glass body 102 with one or more coating solutions that form the low-friction coating 120. Additionally, the low-friction coating 120 may have a non-uniform thickness. For example, the coating thickness may be varied over different regions of a coated glass container 100, which may promote protection in a selected region of the glass body 102.

Where the low-friction coating 120 includes at least two layers, such as the polymer layer 170, interface layer 190, and/or coupling agent layer 180, each layer may have a thickness of less than about 100 µm or even less than or equal to about 1 µm. For example, the thickness of each layer may be less than or equal to about 100 nm, or less than about 90 nm thick, or less than about 80 nm thick, or less than about 70 nm thick, or less than about 60 nm thick, or less than about 50 nm, or even less than about 25 nm thick. The coupling agent layer 180 may be a discontinuous layer. As used herein, the term "discontinuous" refers to a layer of material having at least two separate and distinct islands with empty space therebetween, wherein the at least two separate and distinct islands with empty space therebetween are within a given plane.

As noted herein, the coupling agent may improve the adherence or bonding of the polymer chemical composition to the glass body 102, and is generally disposed between the glass body 102 and the polymer chemical composition. Adhesion, as used herein, refers to the strength of adherence or bonding of the low-friction coating 120 prior to and following a treatment applied to the coated glass container 100, such as a thermal treatment. Thermal treatments include, without limitation, autoclaving, depyrogenation, lyophilization, or the like.

The coupling agent comprises an inorganic material, selected from a metal, metal oxide and/or a ceramic film. Non-limiting examples of suitable inorganic materials used as the coupling agent include titanates, zirconates, tin, titanium, and/or oxides thereof.

The coupling agent may be applied to the exterior surface 108 of the glass body 102 by a submersion process by contacting the glass body 102 with a diluted solution containing the coupling agent. The coupling agent may be mixed in a solvent when applied to the glass body 102. Alternatively, the coupling agent may be applied to the glass body 102 by sputtering, spray pyrolysis and chemical vapor deposition (CVD). The glass body 102 with coupling agent may then be subject to a temperature for any period of time sufficient to adequately liberate water and/or other organic solvents present on the exterior surface 108 of the glass container wall 104.

As noted herein, the low-friction coating also includes a polymer chemical composition. The polymer chemical composition may be a thermally stable polymer or mixture of polymers, such as but not limited to, fluorinated polymers, polyimides, polybenzimidazoles, polysulfones, polyetheretheketones, polyetherimides, polyamides, polyphenyls, polybenzothiazoles, polybenzoxazoles, polybisthiazoles, and polyaromatic heterocyclic polymers with and without organic or inorganic fillers.

The polymer chemical composition may be a polyimide chemical composition. If the low-friction coating 120 includes a polyimide, the polyimide composition may be derived from a polyamic acid, which is formed in a solution by the polymerization of monomers. One such polyamic acid is Novastrat^{®} 800 (commercially available from NeXolve). A curing step imidizes the polyamic acid to form the polyimide. The polyamic acid may be formed from the reaction of a diamine monomer, such as a diamine, and an anhydride monomer, such as a dianhydride. As used herein, polyimide monomers are described as diamine monomers and dianhydride monomers. However, it should be understood that while a diamine monomer has two amine moieties, in the description that follows, any monomer having at least two amine moieties may be suitable as a diamine monomer. Similarly, it should be understood that while a dianhydride monomer having two anhydride moieties, in the description that follows any monomer having at least two anhydride moieties may be suitable as a dianhydride monomer. The reaction between the anhydride moieties of the anhydride monomer and amine moieties of the diamine monomer forms the polyamic acid. Therefore, as used herein, a polyimide chemical composition that is formed from the polymerization of specified monomers refers to the polyimide that is formed following the imidization of a polyamic acid that is formed from those specified monomers. Generally, the molar ratio of the total anhydride monomers and diamine monomers may be about 1:1. While the polyimide may be formed from only two distinct chemical compositions (one anhydride monomer and one diamine monomer), at least one anhydride monomer may be polymerized and at least one diamine monomer may be polymerized to form the polyimide. For example, one anhydride monomer may be polymerized with two different diamine monomers. Any number of monomer combinations may be used. Furthermore, the ratio of one anhydride monomer to a different anhydride monomer, or one or more diamine monomer to a different diamine monomer may be any ratio, such as between about 1:0.1 to 0.1:1, such as about 1:9, 1:4, 3:7, 2:3, 1:1, 3:2, 7:3, 4:1 or 1:9.

The anhydride monomer from which, along with the diamine monomer, the polyimide is formed may be any anhydride monomer and may include a benzophenone structure. The diamine monomer may have an anthracene structure, a phenanthrene structure, a pyrene structure, or a pentacene structure, including substituted versions of the above mentioned dianhydrides.

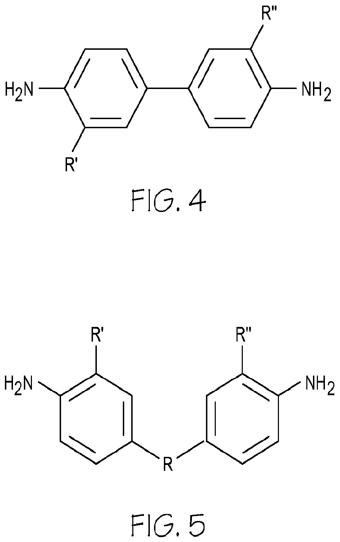

The diamine monomer from which, along with the anhydride monomer, the polyimide is formed may include any diamine monomer. For example, the diamine monomer may include at least one aromatic ring moiety. FIGS. 4 and 5 show examples of diamine monomers that, along with one or more selected anhydride monomer, may form the polyimide of the polymer chemical composition. The diamine monomer may have one or more carbon molecules connecting two aromatic ring moieties together, as shown in FIG. 4, wherein R of FIG. 5 corresponds to an alkyl moiety comprising one or more carbon atoms. Alternatively, the diamine monomer may have two aromatic ring moieties that are directly connected and not separated by at least one carbon molecule, as shown in FIG. 5. The diamine monomer may have one or more alkyl moieties, as represented by R' and R" in FIGS. 4 and 5. For example, in FIGS. 4 and 5, R' and R" may represent an alkyl moiety such as methyl, ethyl, propyl, or butyl moieties, connected to one or more aromatic ring moieties. For example, the diamine monomer may have two aromatic ring moieties wherein each aromatic ring moiety has an alkyl moiety connected thereto and adjacent an amine moiety connected to the aromatic ring moiety. It should be understood that R' and R", in both FIGS. 4 and 5, may be the same chemical moiety or may be different chemical moieties. Alternatively, R' and/or R", in both FIGS. 4 and 5, may represent no atoms at all.

Two different chemical compositions of diamine monomers may form the polyimide. A first diamine monomer may include two aromatic ring moieties that are directly connected and not separated by a linking carbon molecule, and a second diamine monomer may include two aromatic ring moieties that are connected with at least one carbon molecule connecting the two aromatic ring moieties. The first diamine monomer, the second diamine monomer, and the anhydride monomer may have a molar ratio (first diamine monomer: second diamine monomer: anhydride monomer) of about 0.465:0.035:0.5. However, the ratio of the first diamine monomer and the second diamine monomer may vary in a range of about 0.01:0.49 to about 0.40:0.10, while the anhydride monomer ratio remains at about 0.5.

The polyimide composition may be formed from the polymerization of at least a first diamine monomer, a second diamine monomer, and an anhydride monomer, wherein the first and second diamine monomers are different chemical compositions. The anhydride monomer may be a benzophenone, the first diamine monomer including two aromatic rings directly bonded together, and the second diamine monomer including two aromatic rings bonded together with at least one carbon molecule connecting the first and second aromatic rings. The first diamine monomer, the second diamine monomer, and the anhydride monomer may have a molar ratio (first diamine monomer : second diamine monomer : anhydride monomer) of about 0.465:0.035:0.5.

As an example, the first diamine monomer may be ortho-Tolidine, the second diamine monomer may be 4,4'-methylene-bis(2-methylaniline), and the anhydride monomer may be benzophenone-3,3',4,4'-tetracarboxylic dianhydride. The first diamine monomer, the second diamine monomer, and the anhydride monomer may have a molar ratio (first diamine monomer : second diamine monomer : anhydride monomer) of about 0.465:0.035:0.5.

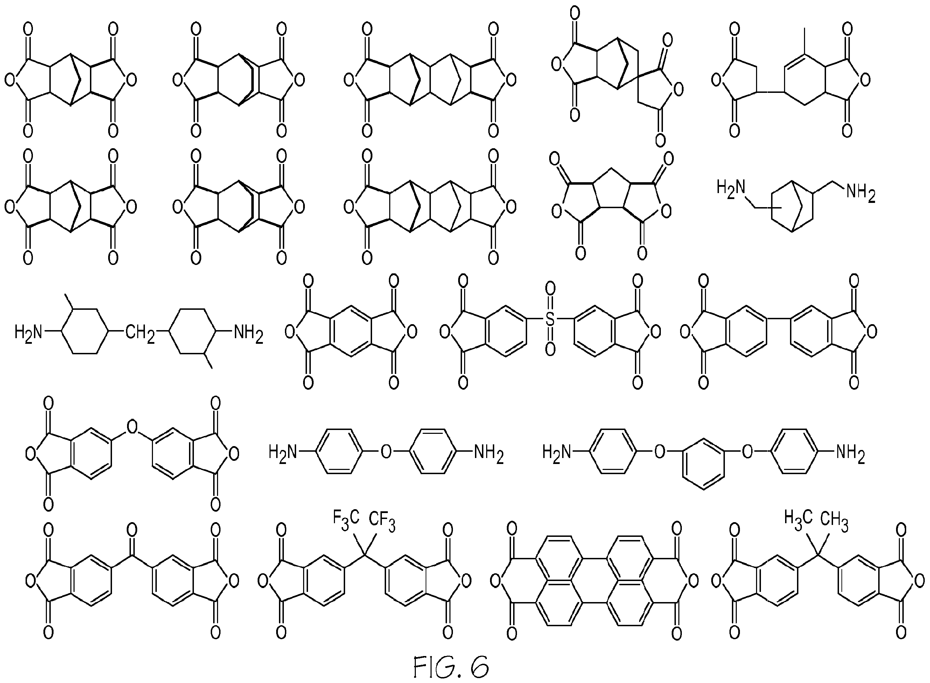

As an example, the polyimide may be formed from the polymerization of one or more of: 2,2-Bis[4-(4-aminophenoxy)phenyl]hexafluoropropane, bicyclo[2.2.1]heptane-2,3,5,6-tetracarboxylic dianhydride, cyclopentane-1,2,3,4-tetracarboxylic 1,2;3,4-dianhydride, bicyclo[2.2.2]octane-2,3,5,6-tetracarboxylic dianhydride, 4arH,8acH)-decahydro- 1t,4t:5c,8c-dimethanonaphthalene-2t,3t,6c,7c-tetracarboxylic 2,3:6,7-dianhydride, 2c,3c,6c,7c-tetracarboxylic 2,3:6,7-dianhydride, 5-endo-carboxymethylbicyclo[2.2.1]-heptane-2-exo,3-exo,5-exo-tricarboxylic acid 2,3:5,5-dianhydride, 5-(2,5-Dioxotetrahydro-3- furanyl)-3-methyl-3-cyclohexene-1,2-dicarboxylic anhydride, isomers of Bis(aminomethyl)bicyclo[2.2.1]heptane, or 4,4'-Methylenebis(2-methylcyclohexylamine), Pyromellitic dianhydride (PMDA) 3,3',4,4'-Biphenyl dianhydride (4,4'-BPDA), 3,3',4,4'-Benzophenone dianhydride (4,4'-BTDA), 3,3',4,4'-Oxydiphthalic anhydride (4,4'-ODPA), 1,4-Bis(3,4-dicarboxyl-phenoxy)benzene dianhydride (4,4'-HQDPA), 1,3-Bis(2,3-dicarboxyl-phenoxy)benzene dianhydride (3,3'-HQDPA), 4,4'-Bis(3,4-dicarboxyl phenoxyphenyl)-isopropylidene dianhydride (4,4' -BPADA), 4,4'-(2,2,2-Trifluoro-1-pentafluorophenylethylidene) diphthalic dianhydride (3FDA), 4,4'-Oxydianiline (ODA), m-Phenylenediamine (MPD), p-Phenylenediamine (PPD), m-Toluenediamine (TDA), 1,4-Bis(4-aminophenoxy)benzene (1,4,4-APB), 3,3'-(m-Phenylenebis(oxy))dianiline (APB), 4,4'-Diamino-3,3'-dimethyldiphenylmethane (DMMDA), 2,2'-Bis(4-(4-aminophenoxy)phenyl)propane (BAPP), 1,4-Cyclohexanediamine 2,2'-Bis[4-(4-amino-phenoxy) phenyl] hexafluoroisopropylidene (4-BDAF), 6-Amino-1-(4'-aminophenyl)-1,3,3-trimethylindane (DAPI), Maleic anhydride (MA), Citraconic anhydride (CA), Nadic anhydride (NA), 4-(Phenylethynyl)-1,2-benzenedicarboxylic acid anhydride (PEPA), 4,4'-diaminobenzanilide (DABA), 4,4'- (hexafluoroisopropylidene)di-phthalicanhydride (6-FDA), Pyromellitic dianhydride, benzophenone-3,3',4,4'-tetracarboxylic dianhydride, 3,3',4,4'-biphenyltetracarboxylic dianhydride, 4,4'-(hexafluoroisopropylidene)diphthalic anhydride, perylene-3,4,9,10-tetracarboxylic dianhydride, 4,4'-oxydiphthalic anhydride, 4,4'-(hexafluoroisopropylidene)diphthalic anhydride, 4,4'-(4,4'-Isopropylidenediphenoxy)bis(phthalic anhydride), 1,4,5,8-Naphthalenetetracarboxylic dianhydride, 2,3,6,7-Naphthalenetetracarboxylic dianhydride, as well as those materials described in U.S. Pat. No. 7,619,042, U.S. Pat. No. 8,053,492, U.S. Pat. No. 4,880,895, U.S. Pat. No. 6,232,428, U.S. Pat. No. 4,595,548, WO Pub. No. 2007/016516, U.S. Pat. Pub. No. 2008/0214777, U.S. Pat. No. 6,444,783, U.S. Pat. No. 6,277,950, and U.S. Pat. No. 4,680,373. FIG. 6 depicts the chemical structure of some suitable monomers that may be used to form a polyimide coating applied to the glass body 102. As another example, the polyamic acid solution from which the polyimide is formed may include poly (pyromellitic dianhydride-co-4,4'-oxydianiline) amic acid (commercially available from Aldrich).

The polymer chemical composition may include a fluoropolymer. The fluoropolymer may be a copolymer wherein both monomers are highly fluorinated. Some of the monomers of the fluoropolymer may be fluoroethylene. The polymer chemical composition may include an amorphous fluoropolymer, such as, but not limited to, Teflon AF (commercially available from DuPont). Alternatively, the polymer chemical composition may include perfluoroalkoxy (PFA) resin particles, such as, but not limited to, Teflon PFA TE-7224 (commercially available from DuPont).

The polymer chemical composition may include a silicone resin. The silicone resin may be a highly branched 3-dimensional polymer which is formed by branched, cage-like oligosiloxanes with the general formula of RₙSi(X)ₘO_{y}, where R is a non-reactive substituent, usually methyl or phenyl, and X is OH or H. While not wishing to be bound by theory, it is believed that curing of the resin occurs through a condensation reaction of Si-OH moieties with a formation of Si-O-Si bonds. The silicone resin may have at least one of four possible functional siloxane monomeric units, which include M-resins, D-resins, T-resins, and Q-resins, wherein M-resins refer to resins with the general formula R₃SiO, D-resins refer to resins with the general formula R₂SiO₂, T-resins refer to resins with the general formula RSiOs, and Q-resins refer to resins with the general formula SiO₄ (a fused quartz). Optionally, resins are made of D and T units (DT resins) or from M and Q units (MQ resins). Other combinations (MDT, MTQ, QDT) may also be used.

The polymer chemical composition may include phenylmethyl silicone resins due to their higher thermal stability compared to methyl or phenyl silicone resins. The ratio of phenyl to methyl moieties in the silicone resins may be varied in the polymer chemical composition. For example, the ratio of phenyl to methyl may be about 1.2, or about 0.84, or about 0.5, or about 0.6, or about 0.7, or about 0.8, or about 0.9, or about 1.0, or about 1.1, or about 1.3, or about 1.4, or about 1.5. The silicone resin may be, but is not limited to, DC 255 (commercially available from Dow Corning), DC806A (commercially available from Dow Corning), any of the DC series resins (commercially available for Dow Corning), and/or Hardsil Series AP and AR resins (commercially available from Gelest). The silicone resins can be used without coupling agent or with coupling agent.

The polymer chemical composition may include silsesquioxane-based polymers, such as but not limited to T-214 (commercially available from Honeywell), SST-3M01 (commercially available from Gelest), POSS Imiclear (commercially available from Hybrid Plastics), and FOX-25 (commercially available from Dow Corning). The polymer chemical composition may include a silanol moiety.

The polymer chemical composition may be a polyimide wherein a polyamic acid solution is applied over the coupling agent layer 180. Alternatively, a polyamic acid derivative may be used, such as, for example, a polyamic acid salt, a polyamic acid ester, or the like. The polyamic acid solution may include a mixture of 1 vol% polyamic acid and 99 vol% organic solvent. The organic solvent may include a mixture of toluene and at least one of N,N-Dimethylacetamide (DMAc), N,N-Dimethylformamide (DMF), and 1-Methyl-2-pyrrolidinone (NMP) solvents, or a mixture thereof. The organic solvent solution may include about 85 vol% of at least one of DMAc, DMF, and NMP, and about 15 vol% toluene. However, other suitable organic solvents may be used. The coated glass container 100 may then be dried at around 150°C for about 20 minutes, or any time and temperature sufficient to adequately liberate the organic solvent present in the low-friction coating 120.

As will be described in greater detail below, the polymeric form of the polymer chemical composition may be applied over the coupling agent layer 180 without requiring curing. For example, instead of applying a polyamic acid to the glass container 100 and curing to form a polyimide, the polyimide may be applied directly over the coupling agent layer 180. Such application of the polymer chemical composition in the polymeric form reduces the requirement of exposing the glass container 100 to high curing temperatures, such as temperatures of greater than about 300°C, during coating of the glass container 100, which reduces the amount of time necessary to form a glass container and the expense associated with such forming.

The glass containers to which the low-friction coating 120 may be applied may be formed from a variety of different glass compositions. The specific composition of the glass article may be selected according to the specific application such that the glass has a desired set of physical properties.

The glass containers may be formed from a glass composition which has a coefficient of thermal expansion in the range from about 25×10⁻⁷/°C to 80×10⁻⁷/°C. For example, the glass body 102 may be formed from alkali aluminosilicate glass compositions which are amenable to strengthening by ion exchange. Such compositions generally include a combination of SiO₂, Al₂O₃, at least one alkaline earth oxide, and one or more alkali oxides, such as Na₂O and/or K₂O. The glass composition may be free from boron and compounds containing boron. Additionally, the glass compositions may further include minor amounts of one or more additional oxides such as, for example, SnO₂, ZrO₂, ZnO, TiO₂, As₂O₃, or the like. These components may be added as fining agents and/or to further enhance the chemical durability of the glass composition. Additionally, the glass surface may include a metal oxide coating comprising SnO₂, ZrO₂, ZnO, TiO₂, As₂O₃, or the like.

The glass body 102 is strengthened by ion-exchange strengthening, herein referred to as "ion-exchanged glass". For example, the glass body 102 may have a compressive stress of greater than or equal to about 300 MPa or even greater than or equal to about 350 MPa, or a compressive stress in a range from about 300 MPa to about 900 MPa. However, it should be understood that the compressive stress in the glass may be less than 300 MPa or greater than 900 MPa. The glass body 102 as described herein may have a depth of layer of greater than or equal to about 20 µm. For example, the depth of layer may be greater than about 50 µm, or greater than or equal to about 75 µm, or even greater than about 100 µm. The ion-exchange strengthening may be performed in a molten salt bath maintained at temperatures from about 350°C to about 500°C. To achieve the desired compressive stress, the glass container coated with the coupling agent layer may be immersed in the salt bath for less than about 30 hours or even less than about 20 hours. For example, the glass container may be immersed in a 100% KNO₃ salt bath at 450°C for about 8 hours.

As one non-limiting example, the glass body 102 may be formed from an ion exchangeable glass composition described in pending U.S. Patent No. 8,753,994 entitled "Glass Compositions with Improved Chemical and Mechanical Durability" and assigned to Corning, Incorporated.

However, it should be understood that the coated glass containers 100 described herein may be formed from other glass compositions. For example, the glass container may be formed from Type 1B glass compositions such as, for example, Schott Type 1B aluminosilicate glass.

The glass article may be formed from a glass composition which meets the criteria for pharmaceutical glasses described by regulatory agencies such as the USP (United States Pharmacopoeia), the EP (European Pharmacopeia), and the JP (Japanese Pharmacopeia) based on their hydrolytic resistance. Per USP 660 and EP 7, borosilicate glasses meet the Type I criteria and are routinely used for parenteral packaging. Examples of borosilicate glass include, but are not limited to Coming^{®} Pyrex^{®} 7740, 7800 and Wheaton 180, 200, and 400, Schott Duran, Schott Fiolax, KIMAX^{®} N-51A, Gerrescheimer GX-51 Flint and others. Soda-lime glass meets the Type III criteria and is acceptable in packaging of dry powders which are subsequently dissolved to make solutions or buffers. Type III glasses are also suitable for packaging liquid formulations that prove to be insensitive to alkali. Examples of Type III soda lime glass include Wheaton 800 and 900. De-alkalized soda-lime glasses have higher levels of sodium hydroxide and calcium oxide and meet the Type II criteria. These glasses are less resistant to leaching than Type I glasses but more resistant than Type III glasses. Type II glasses can be used for products that remain below a pH of 7 for their shelf life. Examples include ammonium sulfate treated soda lime glasses. These pharmaceutical glasses have varied chemical compositions and have a coefficient of linear thermal expansion (CTE) in the range of 20-85 × 10 ⁻⁷ °C⁻¹.

When the coated glass articles described herein are glass containers, the glass body 102 of the coated glass containers 100 may take on a variety of different forms. For example, the glass bodies described herein may be used to form coated glass containers 100 such as vials, ampoules, cartridges, syringe bodies and/or any other glass container for storing pharmaceutical compositions. Moreover, the ability to chemically strengthen the glass containers prior to coating with polymer layer 170 can be utilized to further improve the mechanical durability of the glass containers. The glass containers are ion exchange strengthened prior to application of the polymer layer 170 of the low-friction coating.

Adhesion of the low-friction coating to an ion-exchanged glass body may be stronger than adhesion of the low-friction coating to a non-ion-exchanged glass body. It is believed, without being bound by any particular theory, that any of several aspects of ion-exchanged glass may promote bonding and/or adhesion, as compared with non-ion-exchanged glass. First, ion-exchanged glass may have enhanced chemical/hydrolytic stability that may affect stability of the coupling agent and/or its adhesion to glass surface. Non-ion-exchanged glass typically has inferior hydrolytic stability and under humid and/or elevated temperature conditions, alkali metals could migrate out of the glass body to the interface of the glass surface and coupling agent layer (if present), or even migrate into the coupling agent layer, if present. If alkali metals migrate, as described above, and there is a change in pH, hydrolysis of Si-O-Si bonds at the glass/coupling agent layer interface or in the coupling agent layer itself may weaken either the coupling agent mechanical properties or its adhesion to the glass. Second, when ion-exchanged glasses are exposed to strong oxidant baths, such as potassium nitrite baths, at elevated temperatures, such as 400°C to 450°C, and removed, organic chemical compositions on the surface of the glass are removed, making it particularly well suited for coating with coupling agents without further cleaning. For example, a non-ion-exchanged glass may have to be exposed to an additional surface cleaning treatment, adding time and expense to the process.

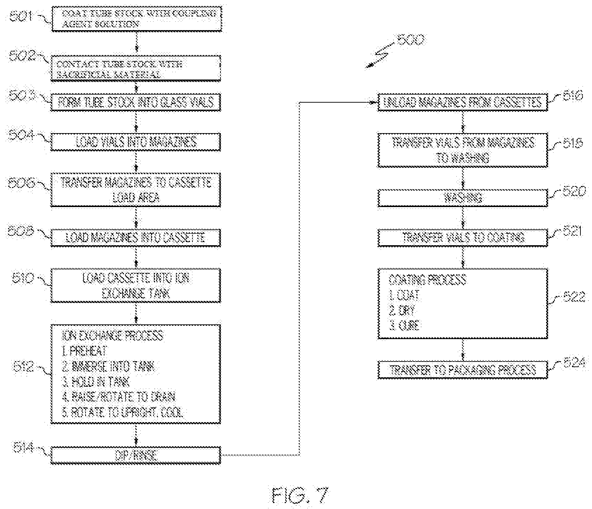

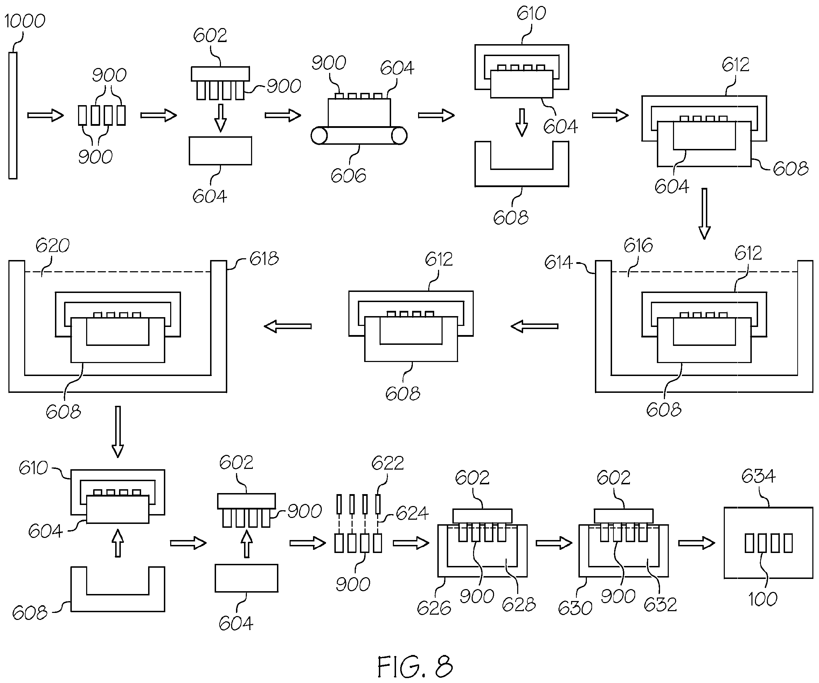

Referring collectively to FIGS. 7 and 8, FIG. 7 contains a process flow diagram 500 of a method for producing a coated glass container 100 having a low-friction coating and FIG. 8 schematically depicts the process described in the flow diagram. It should be appreciated that FIGS. 7 and 8 are merely illustrative of embodiments of the methods described herein.

The method includes contacting 501 a glass tube from which the glass body 102 may be formed with the coupling agent solution to form coated glass tube stock 1000 have a coupling agent layer 180 (as described above). Contacting 501 the glass tube stock with the coupling agent solution may include submerging the glass tube in a diluted solution containing the coupling agent. As alternatives, contacting 501 the glass tube with the coupling agent solution may utilize sputtering, spray pyrolysis or chemical vapor deposition (CVD). The resulting coupling agent layer 180 may have a thickness of less than about 100 µm or even less than or equal to about 1 µm. For example, the resulting coupling agent layer 180 may have a thickness of less than or equal to about 100 nm, or less than about 90 nm thick, or less than about 80 nm thick, or less than about 70 nm thick, or less than about 60 nm thick, or less than about 50 nm, or even less than about 25 nm thick. According to embodiments of the present disclosure, the resulting coupling agent layer 180 may be a discontinuous layer. Where the coupling agent layer 180 is a continuous layer, the thickness of the coupling agent layer 180 may have a thickness which permits subsequent ion exchange strengthening of glass containers 900 which include the coupling agent layer 180. Where the coupling agent layer 180 is a discontinuous layer, empty space between the separate and distinct islands may facilitate ion exchange strengthening the glass containers 900.

The method further includes contacting 502 the coated glass tube stock 1000 having the coupling agent layer 180 with at least one sacrificial material to form a sacrificial layer least partially covering the coupling agent layer 180. Contacting 502 the coated glass tube stock 1000 having the coupling agent layer 180 with at least one sacrificial material may include spraying a mist including the sacrificial material onto the surface of the coupling agent layer 180 at a temperature high enough to evaporate droplets of the mist. The resulting sacrificial layer is a thin film which is not water soluble and which provides lubrication to the surface of the coated glass tube stock 1000 having the coupling agent layer 180. As used herein, the term "sacrificial layer" refers to a layer that is disposed on any substrate surface with the intent to cover, and thereby segregate, the surface of the substrate from ambient conditions. The purpose of such segregation may be to protect the substrate surface from the ambient conditions. As the name suggests, the sacrificial layer, while providing such protection, may get sacrificed, i.e., damaged, destroyed or otherwise removed from the substrate surface. The sacrificial layer may advantageously improve damage tolerance of the coated glass tube stock 1000 when moving, shipping and/or handling the coated glass tube stock 1000 in the method for producing a coated glass container 100.

The sacrificial material may be a liquid or wax material which forms a thin layer when contacting 502 the coated glass tube stock 1000 having the coupling agent layer 180 with the at least one sacrificial material. The sacrificial material may also be chosen such that no residue remains on the coated glass tube stock 1000 when the sacrificial layer is removed from the surface of the coupling agent layer 180. The sacrificial material may be chosen from, for example, water soluble materials, water insoluble materials, or fatty acids. Exemplary water soluble materials include, but are not limited to, salts of stearic acid, and polyethylene sorbitol esters such as Polysorbate 80 and TWEEN 20. Exemplary water insoluble materials include, but are not limited to, polyglycols, polymers and copolymers of ethylene, and propylene oxide. Exemplary fatty acids include, but are not limited, to oleic and stearic acids. Other examples of sacrificial material include the glass forming lubricants described in U.S. Patent No. 8,865,884.

The method may further include forming 503 glass containers 900 (specifically glass vials in the example depicted in FIG. 8) from coated glass tube stock 1000, the coated glass tube stock 1000 having an ion-exchangeable glass composition. Forming 503 glass containers 900 may utilize conventional shaping and forming techniques. During forming 503 the sacrificial layer is removed from the surface of the coupling agent layer 180. For example, where the sacrificial material is an organic material, the sacrificial layer may be removed as a result of the application of heat to the coated glass tube stock 1000 during forming 503 of the glass containers 900.

The method may further include loading 504 the glass containers 900 into a magazine 604 using a mechanical magazine loader 602. The magazine loader 602 may be a mechanical gripping device, such as a caliper or the like, which is capable of gripping multiple glass containers at one time. Alternatively, the gripping device may utilize a vacuum system to grip the glass containers 900. The magazine loader 602 may be coupled to a robotic arm or other similar device capable of positioning the magazine loader 602 with respect to the glass containers 900 and the magazine 604.

The method may further include transferring 506 the magazine 604 loaded with glass containers 900 to a cassette loading area. Transferring 506 may be performed with a mechanical conveyor, such as a conveyor belt 606, overhead crane or the like. Thereafter, the method may include loading 508 the magazine 604 into a cassette 608. The cassette 608 is constructed to hold a plurality of magazines such that a large number of glass containers can be processed simultaneously. Each magazine 604 is positioned in the cassette 608 utilizing a cassette loader 610. The cassette loader 610 may be a mechanical gripping device, such as a caliper or the like, which is capable of gripping one or more magazines at a time. Alternatively, the gripping device may utilize a vacuum system to grip the magazines 604. The cassette loader 610 may be coupled to a robotic arm or other, similar device capable of positioning the cassette loader 610 with respect to the cassette 608 and the magazine 604.

According to embodiments of the present disclosure, the method may further include loading 510 the cassette 608 containing the magazines 604 and glass containers 900 into an ion exchange tank 614 to facilitate chemically strengthening the glass containers 900. The cassette 608 is transferred to the ion exchange station with a cassette transfer device 612. The cassette transfer device 612 may be a mechanical gripping device, such as a caliper or the like, which is capable of gripping the cassette 608. Alternatively, the gripping device may utilize a vacuum system to grip the cassette 608. The cassette transfer device 612 and attached cassette 608 may be automatically conveyed from the cassette loading area to the ion exchange station with an overhead rail system, such as a gantry crane or the like. The cassette transfer device 612 and attached cassette 608 may be conveyed from the cassette loading area to the ion exchange station with a robotic arm. Alternatively, the cassette transfer device 612 and attached cassette 608 may be conveyed from the cassette loading area to the ion exchange station with a conveyor and, thereafter, transferred from the conveyor to the ion exchange tank 614 with a robotic arm or an overhead crane.

Once the cassette transfer device 612 and attached cassette are at the ion exchange station, the cassette 608 and the glass containers 900 contained therein may be preheated prior to immersing the cassette 608 and the glass containers 900 in the ion exchange tank 614. The cassette 608 may be preheated to a temperature greater than room temperature and less than or equal to the temperature of the molten salt bath in the ion exchange tank. For example, the glass containers may be preheated to a temperature from about 300°C - 500°C.

The ion exchange tank 614 contains a bath of molten salt 616, such as a molten alkali salt, such as KNO₃, NaNO₃ and/or combinations thereof. The bath of molten salt may be 100% molten KNO₃ which is maintained at a temperature greater than or equal to about 350°C and less than or equal to about 500°C. However, it should be understood that baths of molten alkali salt having various other compositions and/or temperatures may also be used to facilitate ion exchange of the glass containers.

The method may further include ion exchange strengthening 512 the glass containers 900 in the ion exchange tank 614. Specifically, the glass containers are immersed in the molten salt and held there for a period of time sufficient to achieve the desired compressive stress and depth of layer in the glass containers 900. For example the glass containers 900 may be held in the ion exchange tank 614 for a time period sufficient to achieve a depth of layer of up to about 100 µm with a compressive stress of at least about 300 MPa or even 350 MPa. The holding period may be less than 30 hours or even less than 20 hours. However, it should be understood that the time period with which the glass containers are held in the tank 614 may vary depending on the composition of the glass container, the composition of the bath of molten salt 616, the temperature of the bath of molten salt 616, and the desired depth of layer and the desired compressive stress.

After ion exchange strengthening 512, the cassette 608 and glass containers 900 are removed from the ion exchange tank 614 using the cassette transfer device 612 in conjunction with a robotic arm or overhead crane. During removal from the ion exchange tank 614, the cassette 608 and the glass containers 900 are suspended over the ion exchange tank 614 and the cassette 608 is rotated about a horizontal axis such that any molten salt remaining in the glass containers 900 is emptied back into the ion exchange tank 614. Thereafter, the cassette 608 is rotated back to its initial position and the glass containers are allowed to cool prior to being rinsed.

The cassette 608 and glass containers 900 are then transferred to a rinse station with the cassette transfer device 612. This transfer may be performed with a robotic arm or overhead crane, as described above, or alternatively, with an automatic conveyor such as a conveyor belt or the like. Subsequently the method may include rinsing 514 to remove any excess salt from the surfaces of the glass containers 900 by lowering the cassette 608 and glass containers 900 into a rinse tank 618 containing a water bath 620. The cassette 608 and glass containers 900 may be lowered into the rinse tank 618 with a robotic arm, overhead crane or similar device which couples to the cassette transfer device 612. The cassette 608 and glass containers 900 are then withdrawn from the rinse tank 618, suspended over the rinse tank 618, and the cassette 608 is rotated about a horizontal axis such that any rinse water remaining in the glass containers 900 is emptied back into the rinse tank 618. Optionally, the rinsing operation may be performed multiple times before the cassette 608 and glass containers 900 are moved to the next processing station.

According to embodiments of the present disclosure, the cassette 608 and the glass containers 900 may be dipped in a water bath at least twice. For example, the cassette 608 may be dipped in a first water bath and, subsequently, a second, different water bath to ensure that all residual alkali salts are removed from the surface of the glass article. The water from the first water bath may be sent to waste water treatment or to an evaporator.

The method may further include unloading 516 the magazines 604 from the cassette 608 with the cassette loader 610. Thereafter, the method may include transferring 518 the glass containers 900 to a washing station. The glass containers 900 may be unloaded from the magazine 604 with the magazine loader 602 and transferred to the washing station where the method may further include washing 520 the glass containers with a jet of de-ionized water 624 emitted from a nozzle 622. The jet of de-ionized water 624 may be mixed with compressed air.

Optionally, the method may include inspecting (not depicted in FIG. 7 or FIG. 8) the glass containers 900 for flaws, debris, discoloration and the like. Inspecting the glass containers 900 may include transferring the glass containers to a separate inspection area.

According to embodiments of the present disclosure, the method may further include transferring 521 the glass containers 900 to a coating station with the magazine loader 602 where the low-friction coating is applied to the glass containers 900. At the coating station the method may include applying 522 a low-friction coating as described herein to the glass containers 900. Applying 522 the low-friction coating may include applying the polymer chemical composition over the coupling agent as described above. Applying 522 the low-friction coating may include at least partially immersing the glass containers 900 into a coating dip tank 630 that is filled with the polymer chemical composition coating solution 632 including a polymer chemical composition as described herein. Thereafter, the polymer chemical composition solution is dried to remove any solvents. As an example, where the polymer chemical composition coating solution contains Novastrat^{®} 800 as described above, the coating solution may be dried by conveying the glass containers 900 to an oven and heating the glass containers at 150°C for 20 minutes. Once the polymer chemical composition coatings solution is dried, the glass containers 900 may (optionally) be re-dipped into the polymer chemical composition coating dip tank 630 to apply one or more additional layers of polymer chemical composition. Applying 522 the low-friction coating may include applying the polymer chemical composition to the entire external surface of the container. Alternatively, applying 522 the low-friction coating may include applying the polymer chemical composition to a portion of the external surface of the container.

Once the polymer chemical composition coating solution 632 has been applied to the glass containers 900, the polymer chemical composition may be cured on the glass containers 900. The curing process depends on the type of polymer chemical composition coating applied to the coating process and may include thermally curing the coating, curing the coating with UV light, and/or a combination thereof. As an example, where the polymer chemical composition coating includes a polyimide such as the polyimide formed by the Novastrat^{®} 800 polyamic acid coating solution described above, the glass containers 900 are conveyed to an oven where they are heated from 150°C to approximately 350°C over a period of about 5 to 30 minutes. Upon removal of the glass containers from the oven, the polymer chemical composition coating is cured thereby producing a coated glass container with a low-friction coating. As previously described, where the polymer chemical composition coating solution 632 includes the polymeric form of the polymer chemical composition, applying 522 the low-friction coating may not include curing polymer chemical composition coating solution 632.

After applying 522 the low-friction coating to the glass container 900, the method may include transferring 524 the coated glass containers 100 to a packaging process where the containers are filled and/or to an additional inspection station.

Various properties of the coated glass containers (i.e., coefficient of friction, horizontal compression strength, 4-point bend strength) may be measured when the coated glass containers are in an as-coated condition (i.e., following applying 522 the low-friction coating to the glass container 900 without any additional treatments) or following one or more processing treatments, such as those similar or identical to treatments performed on a pharmaceutical filling line, including, without limitation, washing, lyophilization, depyrogenation, autoclaving, or the like.

Depyrogentation is a process wherein pyrogens are removed from a substance. Depyrogenation of glass articles, such as pharmaceutical packages, can be performed by a thermal treatment applied to a sample in which the sample is heated to an elevated temperature for a period of time. For example, depyrogenation may include heating a glass container to a temperature of between about 250°C and about 380°C for a time period from about 30 seconds to about 72 hours, including, without limitation, 20 minutes, 30 minutes 40 minutes, 1 hour, 2 hours, 4 hours, 8 hours, 12 hours, 24 hours, 48 hours, and 72 hours. Following the thermal treatment, the glass container is cooled to room temperature. One conventional depyrogenation condition commonly employed in the pharmaceutical industry is thermal treatment at a temperature of about 250°C for about 30 minutes. However, it is contemplated that the time of thermal treatment may be reduced if higher temperatures are utilized. The coated glass containers, as described herein, may be exposed to elevated temperatures for a period of time. The elevated temperatures and time periods of heating described herein may or may not be sufficient to depyrogenate a glass container. However, it should be understood that some of the temperatures and times of heating described herein are sufficient to dehydrogenate a coated glass container, such as the coated glass containers described herein. For example, as described herein, the coated glass containers may be exposed to temperatures of about 260°C, about 270°C, about 280°C, about 290°C, about 300°C, about 310°C, about 320°C, about 330°C, about 340°C, about 350°C, about 360°C, about 370°C, about 380°C, about 390°C, or about 400°C, for a period of time of 30 minutes.

As used herein, lyophilization conditions (i.e., freeze drying) refer to a process in which a sample is filled with a liquid that contains protein and then frozen at -100°C, followed by water sublimation for about 20 hours at about -15°C under vacuum.

As used herein, autoclave conditions refer to steam purging a sample for about 10 minutes at about 100°C, followed by an about 20 minute dwelling period wherein the sample is exposed to an about 121°C environment, followed by about 30 minutes of heat treatment at about 121°C.

The coefficient of friction (µ) of the portion of the coated glass container with the low-friction coating may be lower than the coefficient of friction of a surface of an uncoated glass container formed from a same glass composition. A coefficient of friction (µ) is a quantitative measurement of the friction between two surfaces and is a function of the mechanical and chemical properties of the first and second surfaces, including surface roughness, as well as environmental conditions such as, but not limited to, temperature and humidity. As used herein, a coefficient of friction measurement for a coated glass container 100 is reported as the coefficient of friction between the outer surface of a first glass container (having an outer diameter of between about 16.00 mm and about 17.00 mm) and the outer surface of second glass container which is identical to the first glass container, wherein the first and second glass containers have the same body and the same coating composition (when applied) and have been exposed to the same environments prior to fabrication, during fabrication, and after fabrication. Unless otherwise denoted herein, the coefficient of friction refers to the maximum coefficient of friction measured with a normal load of 30 N measured on a vial-on-vial testing jig, as described herein.

As described herein the coefficient of friction of glass containers (both coated and uncoated) is measured with a vial-on-vial testing jig as described in detail in U.S. Patent Application Publication No. 2013/0224407 assigned to Corning, Incorporated.

The portion of a coated glass container with the low-friction coating may have a coefficient of friction of less than or equal to about 0.7 relative to a like-coated glass container, as determined with the vial-on-vial jig. The portion of a coated glass container with the low-friction coating may have a coefficient of friction of less than or equal to about 0.6, or less than or equal to about 0.5, or less than or equal to about 0.4 or even less than or equal to about 0.3. Coated glass containers with coefficients of friction less than or equal to about 0.7 generally exhibit improved resistance to frictive damage and, as a result, have improved mechanical properties. For example, conventional glass containers (without a low-friction coating) may have a coefficient of friction of greater than 0.7. The portion of the coated glass container with the low-friction coating may also have a coefficient of friction of less than or equal to about 0.7 (such as less than or equal to about 0.6, or less than or equal to about 0.5, or less than or equal to about 0.4 or even less than or equal to about 0.3) after exposure to lyophilization conditions and/or after exposure to autoclave conditions. The coefficient of friction of the portion of the coated glass container with the low-friction coating may not increase by more than about 30% after exposure to lyophilization conditions and/or after exposure to autoclave conditions. For example, the coefficient of friction of the portion of the coated glass container with the low-friction coating may not increase by more than about 25%, or about 20%, or about 15%, or even about 10%) after exposure to lyophilization conditions and/or after exposure to autoclave conditions. The coefficient of friction of the portion of the coated glass container with the low-friction coating may not increase at all after exposure to lyophilization conditions and/or after exposure to autoclave conditions.

The coated glass containers described herein have a horizontal compression strength. Horizontal compression strength, as described herein, is measured by positioning the coated glass container 100 horizontally between two parallel platens which are oriented in parallel to the long axis of the glass container. A mechanical load is then applied to the coated glass container 100 with the platens in the direction perpendicular to the long axis of the glass container. The load rate for vial compression is 12.7 mm/min (0.5 in/min), meaning that the platens move towards each other at a rate of 12.7 mm/min (0.5 in/min). The horizontal compression strength is measured at 25°C and 50% relative humidity. A measurement of the horizontal compression strength can be given as a failure probability at a selected normal compression load. As used herein, failure occurs when the glass container ruptures under a horizontal compression in least 50% of samples. Coated glass containers as described herein may have a horizontal compression strength at least 10%, 20%, or even 30% greater than an uncoated vial having the same glass composition.

The horizontal compression strength measurement may also be performed on an abraded glass container. Specifically, operation of the testing jig described above may create damage on the coated glass container outer surface 122, such as a surface scratch or abrasion that weakens the strength of the coated glass container 100. The glass container is then subjected to the horizontal compression procedure described above, wherein the container is placed between two platens with the scratch pointing outward parallel to the platens. The scratch can be characterized by the selected normal pressure applied by a vial-on-vial jig and the scratch length. Unless identified otherwise, scratches for abraded glass containers for the horizontal compression procedure are characterized by a scratch length of 20 mm created by a normal load of 30 N.

The coated glass containers can be evaluated for horizontal compression strength following a heat treatment. The heat treatment may be exposure to a temperature of about 260°C, about 270°C, about 280°C, about 290°C, about 300°C, about 310°C, about 320°C, about 330°C, about 340°C, about 350°C, about 360°C, about 370°C, about 380°C, about 390°C, or about 400°C, for a period of time of 30 minutes. The horizontal compression strength of the coated glass container as described herein may not reduced by more than about 20%, about 30%, or even about 40% after being exposed to a heat treatment, such as those described above, and then being abraded, as described above.

The coated glass articles described herein may be thermally stable after heating to a temperature of at least 260°C for a time period of 30 minutes. The phrase "thermally stable," as used herein, means that the low-friction coating applied to the glass article remains substantially intact on the surface of the glass article after exposure to the elevated temperatures such that, after exposure, the mechanical properties of the coated glass article, specifically the coefficient of friction and the horizontal compression strength, are only minimally affected, if at all. This indicates that the low-friction coating remains adhered to the surface of the glass following elevated temperature exposure and continues to protect the glass article from mechanical insults such as abrasions, impacts and the like.

A coated glass article is considered to be thermally stable if the coated glass article meets both a coefficient of friction standard and a horizontal compression strength standard after heating to the specified temperature and remaining at that temperature for the specified time. To determine if the coefficient of friction standard is met, the coefficient of friction of a first coated glass article is determined in as-received condition (i.e., prior to any thermal exposure) using the testing jig described above and a 30 N applied load. A second coated glass article (i.e., a glass article having the same glass composition and the same coating composition as the first coated glass article) is thermally exposed under the prescribed conditions and cooled to room temperature. Thereafter, the coefficient of friction of the second glass article is determined using the testing jig to abrade the coated glass article with a 30 N applied load resulting in an abraded (i.e., a "scratch") having a length of approximately 20 mm. If the coefficient of friction of the second coated glass article is less than 0.7 and the surface of the glass of the second glass article in the abraded area does not have any observable damage, then the coefficient of friction standard is met for purposes of determining the thermal stability of the low-friction coating. The term "observable damage," as used herein means that the surface of the glass in the abraded area of the glass article contains less than six glass checks per 0.5 cm of length of the abraded area when observed with a Nomarski or differential interference contrast (DIC) spectroscopy microscope at a magnification of 100X with LED or halogen light sources. A standard definition of a glass check or glass checking is described in G. D. Quinn, "NIST Recommended Practice Guide: Fractography of Ceramics and Glasses," NIST special publication 960-17 (2006).

To determine if the horizontal compression strength standard is met, a first coated glass article is abraded in the testing jig described above under a 30 N load to form a 20 mm scratch. The first coated glass article is then subjected to a horizontal compression test, as described herein, and the retained strength of the first coated glass article is determined. A second coated glass article (i.e., a glass article having the same glass composition and the same coating composition as the first coated glass article) is thermally exposed under the prescribed conditions and cooled to room temperature. Thereafter, the second coated glass article is abraded in the testing jig under a 30 N load. The second coated glass article is then subjected to a horizontal compression test, as described herein, and the retained strength of the second coated glass article is determined. If the retained strength of the second coated glass article does not decrease by more than about 20% relative to the first coated glass article then the horizontal compression strength standard is met for purposes of determining the thermal stability of the low-friction coating.

The coated glass containers are considered to be thermally stable if the coefficient of friction standard and the horizontal compression strength standard are met after exposing the coated glass containers to a temperature of at least about 260°C for a time period of about 30 minutes (i.e., the coated glass containers are thermally stable at a temperature of at least about 260°C for a time period of about 30 minutes). The thermal stability may also be assessed at temperatures from about 260°C up to about 400°C. For example, the coated glass containers may be considered to be thermally stable if the standards are met at a temperature of at least about 270°C, or about 280°C, or about 290°C, or about 300°C, or about 310°C, or about 320°C, or about 330°C, or about 340°C, or about 350°C, or about 360°C, or about 370°C, or about 380°C, or about 390°C, or even about 400°C for a time period of about 30 minutes.

The coated glass containers disclosed herein may also be thermally stable over a range of temperatures, meaning that the coated glass containers are thermally stable by meeting the coefficient of friction standard and horizontal compression strength standard at each temperature in the range. For example, the coated glass containers may be thermally stable from at least about 260°C to a temperature of less than or equal to about 400°C, or from at least about 260°C to about 350°C, or from at least about 280°C to a temperature of less than or equal to about 350°C, or from at least about 290°C to about 340°C, or from about 300°C to about 380°C, or even from about 320°C to about 360°C.

After the coated glass container 100 is abraded by an identical glass container with a 30 N normal force, the coefficient of friction of the abraded area of the coated glass container 100 may not increase by more than about 20% following another abrasion by an identical glass container with a 30 N normal force at the same spot, or may not increase at all. For example, after the coated glass container 100 is abraded by an identical glass container with a 30 N normal force, the coefficient of friction of the abraded area of the coated glass container 100 may not increase by more than about 15% or even 10% following another abrasion by an identical glass container with a 30 N normal force at the same spot, or does not increase at all.

Mass loss refers to a measurable property of the coated glass container 100 which relates to the amount of volatiles liberated from the coated glass container 100 when the coated glass container is exposed to a selected elevated temperature for a selected period of time. Mass loss is generally indicative of the mechanical degradation of the coating due to thermal exposure. Since the glass body of the coated glass container does not exhibit measurable mass loss at the temperatures reported, the mass loss test, as described in detail herein, yields mass loss data for only the low-friction coating that is applied to the glass container. Multiple factors may affect mass loss. For example, the amount of organic material that can be removed from the coating may affect mass loss. The breakdown of carbon backbones and side chains in a polymer will result in a theoretical 100% removal of the coating. Organometallic polymer materials typically lose their entire organic component, but the inorganic component remains behind. Thus, mass loss results are normalized based upon how much of the coating is organic and inorganic (e.g., % silica of the coating) upon complete theoretical oxidation.

To determine the mass loss, a coated sample, such as a coated glass vial, is initially heated to 150°C and held at this temperature for 30 minutes to dry the coating, effectively driving off H₂O from the coating. The sample is then heated from 150°C to 350°C at a ramp rate of 10°C/min in an oxidizing environment, such as air. For purposes of mass loss determination, only the data collected from 150°C to 350°C is considered. Coated glass containers as described herein include a low-friction coating that may have a mass loss of less than about 5% of its mass when heated from a temperature of 150°C to 350°C at a ramp rate of about 10°C/minute. For example, the low-friction coating may have a mass loss of less than about 3%, or less than about 2%, %, or less than about 1.5%, %, or even less than about 1% when heated from a temperature of 150°C to 350°C at a ramp rate of about 10°C/minute

Mass loss results are based on a procedure wherein the weight of a coated glass container is compared before and after a heat treatment, such as a ramping temperature of 10°/minute from 150°C to 350°C, as described herein. The difference in weight between the pre-heat treatment and post-heat treatment vial is the weight loss of the coating, which can be standardized as a percent weight loss of the coating such that the pre-heat treatment weight of the coating (weight not including the glass body of the container and following the preliminary heating step) is known by comparing the weight on an uncoated glass container with a pretreatment coated glass container. Alternatively, the total mass of coating may be determined by a total organic carbon test or other like means.

The transparency and color of the coated container may be assessed by measuring the light transmission of the container within a range of wavelengths between 400-700 nm using a spectrophotometer. The measurements are performed such that a light beam is directed normal to the container wall such that the beam passes through the low-friction coating twice, first when entering the container and then when exiting it. Light transmission through coated glass containers as described herein may be greater than or equal to about 55% of a light transmission through an uncoated glass container for wavelengths from about 400 nm to about 700 nm. As described herein, a light transmission can be measured before a thermal treatment or after a thermal treatment, such as the heat treatments described herein. For example, for each wavelength of from about 400 nm to about 700 nm, the light transmission may be greater than or equal to about 55% of a light transmission through an uncoated glass container. The light transmission through the coated glass container may be greater than or equal to about 55%, about 60%, about 65%, about 70%, about 75%, about 80%, or even about 90% of a light transmission through an uncoated glass container for wavelengths from about 400 nm to about 700 nm.

As described herein, a light transmission can be measured before an environmental treatment, such as a thermal treatment described herein, or after an environmental treatment. For example, following a heat treatment of about 260°C, about 270°C, about 280°C, about 290°C, about 300°C, about 310°C, about 320°C, about 330°C, about 340°C, about 350°C, about 360°C, about 370°C, about 380°C, about 390°C, or about 400°C, for a period of time of 30 minutes, or after exposure to lyophilization conditions, or after exposure to autoclave conditions, the light transmission through the coated glass container may be greater than or equal to about 55%, about 60%, about 65%, about 70%, about 75%, about 80%, or even about 90% of a light transmission through an uncoated glass container for wavelengths from about 400 nm to about 700 nm

The coated glass container 100 may be perceived as colorless and transparent to the naked human eye when viewed at any angle, or the low-friction coating 120 may have a perceptible tint, such as when the low-friction coating 120 includes a polyimide formed from poly(pyromellitic dianhydride-co-4,4'-oxydianiline) amic acid commercially available from Aldrich.

The coated glass container 100 may have a low-friction coating 120 that is capable of receiving an adhesive label. That is, the coated glass container 100 may receive an adhesive label on the coated surface such that the adhesive label is securely attached.

### EXAMPLES

Embodiments of the present disclosure are further described below with respect to certain exemplary and specific embodiments thereof, which are illustrative only and not intended to be limiting.

### Reference Example 1

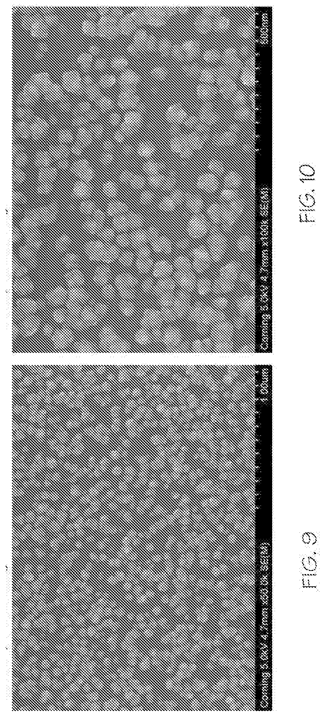

Glass tubes were contacted with a coupling agent solution at a flow rate of 50 SCCM and a temperature of about 380°C for about 30 seconds to form a coated glass tube having a coupling agent layer. The coupling agent layer was a SnO₂ layer. From the coated glass tubes were formed glass articles, which in this example were vials having a shape such as the glass container shown in FIG. 1. An SEM image on a 1.00 µm scale of the SnO₂ layer on the glass vials is shown in FIG. 9 and an SEM image on a 500 nm scale of the SnO₂ layer on the glass vials is shown in FIG. 10. As can be seen from the images, the SnO₂ layer forms as a discontinuous layer on the surface of the glass article.

### Reference Example 2

Coated glass articles formed in accordance with the glass articles in Example 1 and uncoated glass articles formed from uncoated glass tubes were separately ion exchange strengthened in a KNO₃ salt bath with 0.35 wt. % silicic acid maintained at about 490°C for about 5 hours. In this example, the glass articles were vials having a shape such as the glass container shown in FIG. 1. Following completion of the ion exchange process, three measurements to determine depth of layer and three measurements to determine compressive stress were performed on two of the coated vials and two of the uncoated vials and an average depth of layer and an average compressive stress was determined. The average compressive stress for the uncoated vials was determined to be 448.42 ± 9.36 MPa and the average compressive stress for the coated vials was determined to be 471.27 ± 6.82 MPa. The average depth of layer for the uncoated vials was determined to be 103.51 ± 1.23 µm and the average depth of layer for the coated vials was determined to be 75.09.27 ± 1.10 µm.

Unexpectedly, it was noted that ion exchange strengthening of the glass articles could be achieved with a coupling agent layer disposed on the surface of the glass article. Without wishing to be bound and any particular theory, it is believed that the empty space between the separate and distinct islands of the discontinuous coupling agent layer may facilitate ion exchange strengthening of the glass articles. Additionally, it was unexpected that the coated glass vials achieved a greater compressive stress than the uncoated glass vials. It is noted herein that the coated glass vials achieved a depth of layer that is less than the depth of layer achieved by the uncoated glass vials. Conventionally, strengthened glass articles are those having a depth of layer of greater than about 20 µm with a depth of layer of greater than about 90 µm being considered a "deep depth of layer". Therefore, the depth of layer of the coated glass vials formed herein is at least equivalent to, or better than, the depth of layer of conventional strengthened glass articles.

### Reference Example 3

Coated glass articles formed in accordance with the glass articles in Example 1 and uncoated glass articles formed from uncoated glass tubes were dip coated in a solution containing a sacrificial material. The solution contained 0.25 wt. % of the sacrificial material which was Polysorbate 80. In this example, the glass articles were vials having a shape such as the glass container shown in FIG. 1. The glass vials were then placed into an oven at a temperature of about 120°C for about 10 minutes to volatilize water from the surface of the vials.

The coefficient of friction of the glass vials was then determined using a vial-on-vial testing jig as described herein. The glass articles were each scratched several times while progressively increasing the load from 0 N to 160 N. The uncoated glass vials: exhibited an average coefficient of friction of 0.06 ± 0.04 in the load range of 0 N to 60 N; exhibited an average coefficient of friction of 0.13 ± 0.08 in the load range of 60 N to 110 N; and exhibited an average coefficient of friction of 0.28 ± 0.14 in the load range of 110N 1to 60 N. In contrast, the coated glass vials: exhibited an average coefficient of friction of 0.10 ± 0.006 throughout the entire load range of 0 N to 160 N.

The coated glass vials exhibited a lower average coefficient of friction than the uncoated glass vials. Thus it was determined that the coupling agent layers as described herein provide the advantageous properties generally associated with low-friction coatings as described in the present application above. Additionally, coating the coupling agent layer with a sacrificial material increases damage tolerance of the coated glass tube when moving, shipping and/or handling the coated glass tube prior to forming the coated glass article from the coated glass tube. Such increased damage tolerance allows for the coupling agent layers as described herein to maintain the advantageous properties generally associated with low-friction coatings after forming the coated glass article from the coated glass tube.

## Claims

1. A method for forming a glass container (100) having a low-friction coating (120), the method comprising:
contacting (501) a glass tube with a coupling agent solution to form a coated glass tube (1000) having a coupling agent layer (180), wherein the coupling agent comprises an inorganic material selected from a metal, metal oxide and/or ceramic film;
contacting (502) the coated glass tube (1000) with at least one sacrificial material to form a sacrificial layer at least partially covering the coupling agent layer (180);
subsequent to contacting (502) the coated glass tube (1000) with at least one sacrificial material, forming (503) at least one coated glass container (100) from the coated glass tube (1000), the at least one coated glass container (100) comprising the coupling agent layer (180);
ion exchange strengthening (512) the at least one coated glass container (100) in an ion exchange salt bath (616); and
applying (522) a polymer chemical composition solution to the at least one coated glass container (100) to form a low-friction coating (120),
wherein forming the at least one coated glass container (100) further comprises removing the sacrificial layer from the coated glass tube (1000).

2. The method of claim 1, wherein contacting (501) the glass tube with a coupling agent solution comprises submerging the glass tube in a diluted solution containing the coupling agent.

3. The method of any of the preceding claims, wherein contacting (501) the glass tube with a coupling agent solution comprises chemical vapor deposition of a diluted solution containing the coupling agent.

4. The method of any of the preceding claims, wherein the coupling agent layer (180) comprises a discontinuous layer.

5. The method of any of the preceding claims, wherein the sacrificial material comprises a lubricant, or wherein the sacrificial material is selected from the group consisting of water soluble materials, water insoluble materials, and fatty acids

6. The method of any of the preceding claims, wherein the coupling agent layer (180) is in direct contact with an exterior surface of the at least one coated glass container (100).

7. The method of any of the preceding claims, wherein applying a polymer chemical composition solution to the at least one coated glass container (100) comprises directly contacting the coupling agent layer (180) with the polymer chemical composition solution.

8. The method of any of the preceding claims, wherein the polymer chemical composition solution comprises polymerizable monomers and wherein applying a polymer chemical composition solution to the at least one coated glass container (100) further comprises curing the polymer chemical composition solution.

9. The method of any of the preceding claims, wherein the polymer chemical composition solution comprises a polymeric composition.

10. The method of any of the preceding claims, wherein the ion exchange salt bath comprises a molten salt.

## Patentansprüche

1. Verfahren zum Bilden eines Glasbehälters (100) mit einer reibungsarmen Beschichtung (120), wobei das Verfahren Folgendes umfasst:
Inkontaktbringen (501) eines Glasrohrs mit einer Haftvermittlerlösung, um ein beschichtetes Glasrohr (1000) mit einer Haftvermittlerschicht (180) zu bilden, wobei der Haftvermittler ein anorganisches Material umfasst, das aus einem Metall-, Metalloxid- und/oder Keramikfilm ausgewählt ist;
Inkontaktbringen (502) des beschichteten Glasrohrs (1000) mit mindestens einem Opfermaterial, um eine Opferschicht zu bilden, welche die Haftvermittlerschicht (180) mindestens teilweise bedeckt;
im Anschluss an das Inkontaktbringen (502) des beschichteten Glasrohrs (1000) mit mindestens einem Opfermaterial, Bilden (503) mindestens eines beschichteten Glasbehälters (100) aus dem beschichteten Glasrohr (1000), wobei der mindestens eine beschichtete Glasbehälter (100) die Haftvermittlerschicht (180) umfasst;
Ionenaustauschhärten (512) des mindestens einen beschichteten Glasbehälters (100) in einem Ionenaustauschsalzbad (616); und
Aufbringen (522) einer Lösung einer chemischen Polymerzusammensetzung auf den mindestens einen beschichteten Glasbehälter (100), um eine reibungsarme Beschichtung (120) zu bilden,
wobei das Bilden des mindestens einen beschichteten Glasbehälters (100) ferner Entfernen der Opferschicht von dem beschichteten Glasrohr (1000) umfasst.

2. Verfahren nach Anspruch 1, wobei das Inkontaktbringen (501) des Glasrohrs mit einer Haftvermittlerlösung Eintauchen des Glasrohrs in eine verdünnte Lösung, die den Haftvermittler enthält, umfasst.

3. Verfahren nach einem der vorhergehenden Ansprüche, wobei das Inkontaktbringen (501) des Glasrohrs mit einer Haftvermittlerlösung eine chemische Gasphasenabscheidung einer verdünnten Lösung, die den Haftvermittler enthält, umfasst.

4. Verfahren nach einem der vorhergehenden Ansprüche, wobei die Haftvermittlerschicht (180) eine diskontinuierliche Schicht umfasst.

5. Verfahren nach einem der vorhergehenden Ansprüche, wobei das Opfermaterial ein Schmiermittel umfasst oder wobei das Opfermaterial aus der Gruppe ausgewählt ist, die aus wasserlöslichen Materialien, wasserunlöslichen Materialien und Fettsäuren besteht.

6. Verfahren nach einem der vorhergehenden Ansprüche, wobei die Haftvermittlerschicht (180) in direktem Kontakt mit einer Außenfläche des mindestens einen beschichteten Glasbehälters (100) steht.

7. Verfahren nach einem der vorhergehenden Ansprüche, wobei das Aufbringen einer Lösung einer chemischen Polymerzusammensetzung auf den mindestens einen beschichteten Glasbehälter (100) direktes Inkontaktbringen der Haftvermittlerschicht (180) mit der Lösung einer chemischen Polymerzusammensetzung umfasst.

8. Verfahren nach einem der vorhergehenden Ansprüche, wobei die Lösung einer chemischen Polymerzusammensetzung polymerisierbare Monomere umfasst und wobei das Aufbringen einer Lösung einer chemischen Polymerzusammensetzung auf den mindestens einen beschichteten Glasbehälter (100) ferner Aushärten der Lösung einer chemischen Polymerzusammensetzung umfasst.

9. Verfahren nach einem der vorhergehenden Ansprüche, wobei die Lösung einer chemischen Polymerzusammensetzung eine polymere Zusammensetzung umfasst.

10. Verfahren nach einem der vorhergehenden Ansprüche, wobei das Ionenaustauschsalzbad eine Salzschmelze umfasst.

## Revendications

1. Procédé de formation d'un récipient en verre (100) comportant un revêtement à faible frottement (120), le procédé comprenant :
la mise en contact (501) d'un tube en verre avec une solution d'agent de couplage de manière à former un tube en verre revêtu (1000) comportant une couche d'agent de couplage (180), ledit agent de couplage comprenant un matériau inorganique choisi parmi un métal, un oxyde métallique et/ou un film céramique ;
la mise en contact (502) du tube en verre revêtu (1000) avec au moins un matériau sacrificiel de manière à former une couche sacrificielle recouvrant au moins partiellement la couche d'agent de couplage (180) ;
suite à la mise en contact (502) du tube en verre revêtu (1000) avec au moins un matériau sacrificiel, la formation (503) d'au moins un récipient en verre revêtu (100) à partir du tube en verre revêtu (1000), ledit au moins un récipient en verre revêtu (100) comprenant la couche d'agent de couplage (180) ;
le renforcement par échange d'ions (512) dudit au moins un récipient en verre revêtu (100) dans un bain de sel échangeur d'ions (616) ; et
l'application (522) d'une solution de composition chimique polymère sur au moins un récipient en verre revêtu (100) de manière à former un revêtement à faible frottement (120),
ladite formation dudit au moins un récipient en verre revêtu (100) comprenant en outre le retrait de la couche sacrificielle du tube en verre revêtu (1000).

2. Procédé selon la revendication 1, ladite mise en contact (501) du tube en verre avec une solution d'agent de couplage comprenant l'immersion du tube en verre dans une solution diluée contenant l'agent de couplage.

3. Procédé selon l'une quelconque des revendications précédentes, ladite mise en contact (501) du tube en verre avec une solution d'agent de couplage comprenant le dépôt chimique en phase vapeur d'une solution diluée contenant l'agent de couplage.

4. Procédé selon l'une quelconque des revendications précédentes, ladite couche d'agent de couplage (180) comprenant une couche discontinue.

5. Procédé selon l'une quelconque des revendications précédentes, ledit matériau sacrificiel comprenant un lubrifiant, ou ledit matériau sacrificiel étant choisi dans le groupe constitué par les matériaux solubles dans l'eau, les matériaux insolubles dans l'eau et les acides gras.

6. Procédé selon l'une quelconque des revendications précédentes, ladite couche d'agent de couplage (180) étant en contact direct avec une surface extérieure dudit au moins un récipient en verre revêtu (100).

7. Procédé selon l'une quelconque des revendications précédentes, ladite application d'une solution de composition chimique polymère sur au moins un récipient en verre revêtu (100) comprenant la mise en contact directe de la couche d'agent de couplage (180) avec la solution de composition chimique polymère.

8. Procédé selon l'une quelconque des revendications précédentes, ladite solution de composition chimique polymère comprenant des monomères polymérisables et ladite application d'une solution de composition chimique polymère sur au moins un récipient en verre revêtu (100) comprenant en outre le durcissement de la solution de composition chimique polymère.

9. Procédé selon l'une quelconque des revendications précédentes, ladite solution de composition chimique polymère comprenant une composition polymère.

10. Procédé selon l'une quelconque des revendications précédentes, ledit bain de sel échangeur d'ions comprenant un sel fondu.
